# EUROPEAN PATENT APPLICATION

(11) **EP 3 229 481 A1**
(43) Date of publication of application: **11.10.2017**
(21) Application number: 16202631.4
(22) Date of filing: 07.12.2016
(51) Int. Cl.: H04N 21/422, G06F 3/048, H04N 21/441

(54) **MEDIA SYSTEM FOR PROVIDING A USER PROFILE USING FORCE INPUT AND METHOD FOR PROVIDING A PERSONALIZED SERVICE IN THE SAME**

(30) Priority: 06.04.2016 KR 20160042362
(71) Applicant: Humax Co., Ltd., Gyeonggi-do, 17040 (KR)
(72) Inventor: PARK, Sung Heum, 16975 Yongin-si, Gyeonggi-do (KR)
(74) Representative: Zardi, Marco

(57) **Abstract**

A media system for generating a user profile by analyzing force input to a remote controller and providing a personalized service according to the generated user profile and a method for providing the personalized service in the same are disclosed. A computer processing device (server) in the media system comprises an information collection unit configured to collect information about a force input applied to a remote controller during a predetermined period of time and a profiling unit configured to generate at least one user profile according to the collected information. Here, the force input means an input applied to the remote controller with higher pressure or wider area than pressure or an area of a normal input.

## Description

### BACKGROUND

### 1. Field of the Invention

The present disclosure relates to a media system for providing a user profile using force input and a method for providing a personalized service in the same.

### 2. Description of the Related Art

A set-top box is connected to a television, converts properly a video signal and a voice signal received from an external device and displays an image corresponding to the converted video and voice signal through the television.

The set-top box receives an IPTV signal, a cable TV signal, a satellite TV signal or a general signal for broadcasting, and the set-top box displays the received signal on the television.

The set-top box generally interoperates with a wired or wireless controller. A user remotely controls the set-top box with the remote controller.

Functions of the set-top box or the television are diversified as types of contents and services provided from an IPTV, a cable TV or a satellite TV have been diversified. The number of buttons in the remote controller controlling the set-top box or the television has increased due to the diversification of the functions.

It is preferable to provide various contents and services to the user, but the user need to know a function of each button in the remote controller in order to fully enjoy the various contents and services provided.

It becomes difficult for the user to control the remote controller with keeping the user's eyes toward the television (blind control) as the remote controller has lots of buttons. Additionally, there are many factors distracting user's view when the user controls the remote controller. For example, the user should look at the remote controller and select a relevant button whenever the user wants to properly control the remote controller.

A demand for a remote controller having few or no button has been on the rise. Since a conventional remote controller does not satisfy such demand, a system and method for controlling the remote controller minimizing the number of the buttons in the remote controller is needed while allowing the user to enjoy a variety of contents and services. With the remote controller having few or no button, the user may easily figure out how to use the remote controller and it also enables the user to perform the blind control when using the remote controller.

Specially, a method for providing a personalized service for each user with few key or no key in the remote controller has been required.

### SUMMARY

The invention has been made to address at least the disadvantages and problems described above, and to provide a media system for generating a user profile by analyzing force input to a remote controller and providing a personalized service based on the generated user profile and a method for providing the personalized service in the same.

According to one embodiment of the invention, a computer processing device comprises an information collection unit configured to collect information about a force input applied to a remote controller during a predetermined period of time; and a profiling unit configured to generate at least one user profile according to the collected information. Here, the force input means an input applied to the remote controller with higher pressure or wider area than pressure or an area of a normal input.

According to another embodiment of the invention, a computer processing device comprises a personalized service unit configured to collect information about a force input applied to a remote controller during a predetermined period of time or information about the force input and user's record, and set a personalized service for a user according to the collected information; and a control unit configured to control an operation of the personalized service unit. Here, the force input means an input applied to the remote controller with higher pressure or wider area than pressure or an area of a normal input.

According to one embodiment of the invention, an image processing terminal comprises an input execution unit configured to execute a specific operation in response to a force input to a remote controller, wherein the specific operation is different from an operation in response to a normal input applied to the remote controller; and a personalized service unit configured to provide a personalized service for a user based on a user profile corresponding to the force input applied to the remote controller after the user profile is set. Here, the user profile is related to information, collected during a predetermined period of time, about the force input to the remote controller, and the force input means an input applied to the remote controller with higher pressure or wider area than pressure or an area of the normal input.

According to one embodiment of the invention, a method for providing a personalized service comprises collecting information about a force input applied to a remote controller during a predetermined period of time; generating at least one user profile through the collected information about force input; and providing the personalized service according to a user profile corresponding to new force input when the new force input is applied to the remote controller after the user profile is generated. Here, the force input means an input applied to the remote controller with higher pressure or wider area than pressure or an area of a normal input.

A remote controller of a media system of the invention applies force input as well as normal input, and each of the inputs may be matched with various functions of an image processing terminal such as a set-top box, a television, etc. As a result, the remote controller may control various functions of the image processing terminal though it is implemented with few key or no key.

The media system generates a user profile through an analysis of the force input to the remote controller, and thus the user profile may be generated without a process of authenticating a user. Additionally, since the media system provides a personalized service to the user according to the user profile, the user may get providing a recommendation list, etc. suitable for his preference.

### BRIEF DESCRIPTION OF DRAWINGS

The aspects, features, advantages and embodiments of the invention will be more apparent from the following detailed description taken in conjunction with reference to the accompanying drawings, in which:
FIG. 1 is a view illustrating a media system according to one embodiment of the invention;
FIG. 2A is a view illustrating schematically a remote controller according to one embodiment of the invention;
FIG. 2B is a view illustrating a gesture operation according to one embodiment of the invention;
FIG. 3 is a view illustrating a control operation of the remote controller according to one embodiment of the invention;
FIG. 4A to FIG. FIG. 4C are a view illustrating touch of the touch means according to one embodiment of the invention;
FIG. 5 is a flow chart illustrating schematically an operation of a media system according to one embodiment of the invention;
FIG. 6 to FIG. 10 are views illustrating examples related to the operation in FIG. 5;
FIG. 11 is a flowchart illustrating schematically an operation of the media system according to another embodiment of the invention;
FIG. 12A and FIG. 12B are views illustrating an example related to the operation in FIG. 11;
FIG. 13 is a flowchart illustrating a user profiling and a personalized service according to one embodiment of the invention;
FIG. 14 is a view illustrating a user profile according to one embodiment of the invention;
FIG. 15 is a flow chart illustrating a process of changing the user profile according to one embodiment of the invention;
FIG. 16 to FIG. 18 are views illustrating examples of the process of changing the user profile;
FIG. 19 is a flowchart illustrating a process of updating the user profile according to one embodiment of the invention;
FIG. 20 is a view illustrating an operation of a media system according to a still another embodiment of the invention;
FIG. 21 is a view illustrating an upgrade operation of the media system according to one embodiment of the invention;
FIG. 22 is a block diagram illustrating a remote controller according to one embodiment of the invention;
FIG. 23 is a block diagram illustrating an image processing terminal according to one embodiment of the invention;
FIG. 24 is a block diagram illustrating a server, i.e. a computer processing device according to one embodiment of the invention;
FIG. 25 is a view illustrating a structure of the remote controller according to one embodiment of the invention; and
FIG. 26 is a view illustrating a structure of the remote controller according to another embodiment of the invention.

### DETAILED DESCRIPTION

In the present specification, an expression used in the singular encompasses the expression of the plural, unless it has a clearly different meaning in the context. In the present specification, terms such as "comprising" or "including," etc., should not be interpreted as meaning that all of the elements or operations are necessarily included. That is, some of the elements or operations may not be included, while other additional elements or operations may be further included. Also, terms such as "unit," "module," etc., as used in the present specification may refer to a part for processing at least one function or action and may be implemented as hardware, software, or a combination of hardware and software.

The invention relates to a media system including an image processing terminal, a remote controller for controlling the same and a server. Here, the image processing terminal may be a display device including a television, for displaying an image or a set-top box for transmitting an image signal to the display device. That is, the image processing terminal is not limited as a specific device as long as it is a device related to processing of the image. For example, the image processing terminal may be the set-top box or the television with a function of the set-top box.

The remote controller of the invention includes at least one key, and provides a control signal, having information concerning a sensing level of a key selected by a user, to the image processing terminal. In this case, the image processing terminal may perform different function or screen according to the sensing level of the key. Here, the key may be implemented with a physical button including a dome key, or by software.

The server may generate a user profile according to an input to the remote controller, particularly a force input described below, and provide a personalized service to the user according to the generated user profile. Accordingly, a processing of authenticating the user is not needed when the user profile is generated.

Hereinafter, various embodiments of the invention will be described in detail with reference to accompanying drawings.

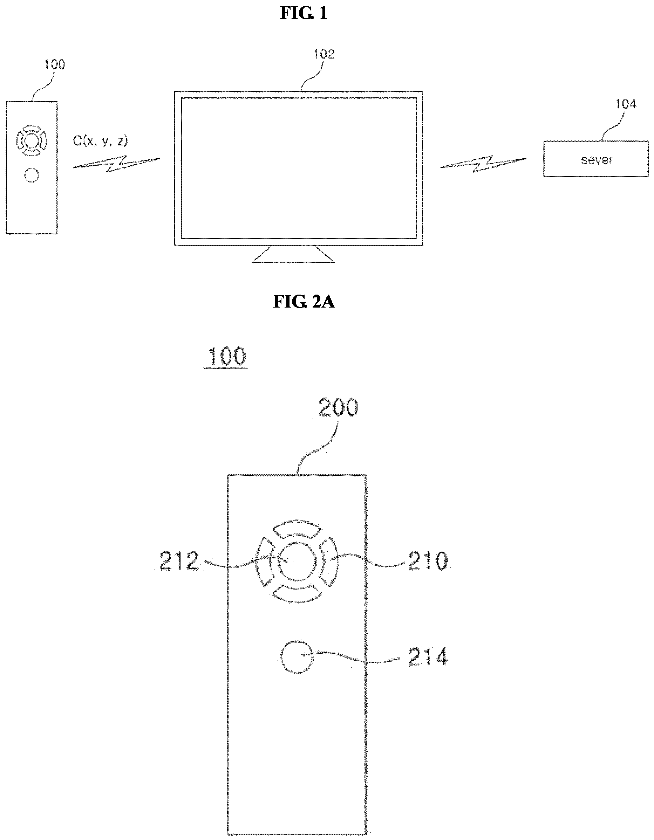

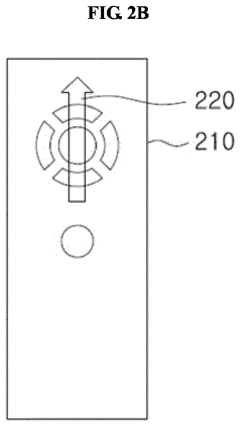

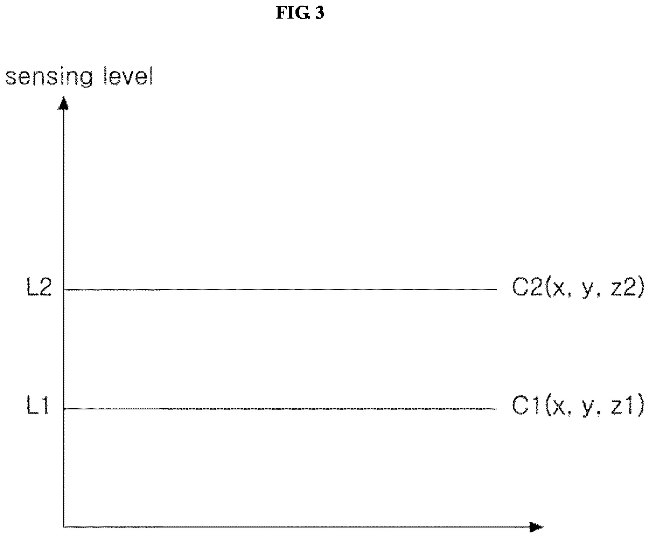

FIG. 1 is a view illustrating a media system according to one embodiment of the invention, FIG. 2A is a view illustrating schematically a remote controller according to one embodiment of the invention, FIG. 2B is a view illustrating a gesture operation according to one embodiment of the invention, and FIG. 3 is a view illustrating a control operation of the remote controller according to one embodiment of the invention. On the other hand, FIG. 2A shows the remote controller having keys embodied in software type.

In FIG. 1, the media system of the present embodiment comprises a remote controller 100, an image processing terminal 102 and a server 104. Here, since the server 104 is a device for processing various data by using a processor, it may be referred to as a computer processing device.

In one embodiment, as shown (A) in FIG. 2A and FIG. 2B, the remote controller 100 may include a body 200, a navigation key 210 including up, down, left, or right directional keys, a function key 214 for performing a variety of operations such as an esc key and a home key, etc., and a determination key 212 for determining an operation such as an OK key, etc. On the other hand, various keys other than the navigation key 210, the determination key 212 and the function key 214 may exist in the remote controller 100. The various keys may be classified as the navigation key 210, the determination key 212 and the function key 214.

The remote controller 100 may be connected to the image processing terminal 102 via wireless communication, and control the operation of the image processing terminal 102. For example, the remote controller 100 may control a program guide displayed on the image processing terminal 102, e.g. the television.

In one embodiment, a function related to two or more operations of the image processing terminal 102 may be set to at least one of the keys in the remote controller 100. Particularly, the remote controller 100 may transmit a control signal, for performing a different operation in response to a pressure or an area applied to the key pressed or touched by using a touch means to the image processing terminal 102. The touch means may include a finger and any input device. Here, a sensing level of the remote controller 100 differs according to the pressure or the area applied to the key, and thus the remote controller 100 may transmit a different control signal to the image processing terminal 102 depending on the sensing level of the key.

An input to the remote controller 100 by the touch means may include a normal input and a force input. The normal input means an input pressed generally by a user. In this case, a general operation set to the key of the remote controller is performed like an operation of the key of the remote controller in conventional technique. For example, an up operation is performed when an up key is pressed or touched. The force input means an input to the key when the key is pressed or touched with higher pressure or wider area than the normal input. In this case, an operation or a screen of the image processing terminal 102 is different from that of the image processing terminal 102 in the normal input. On the other hand, though a long press is applied under the normal input, the long press may not be regarded as the force input but be recognized as the normal input. Various embodiments related to the above description will be described below.

In another embodiment, if the key of the remote controller 100 selected by the touch means has a coordinate (x, y), information concerning the sensing level may be expressed in a z axis. That is, both the coordinate of the selected key and the sensing level may be expressed in a three-dimensional coordinate (x, y, z). However, other methods may be used to express the coordinate and the sensing level of the selected key. For example, four or more dimensional coordinate may be used.

Accordingly, in the event that the user selects a specific key with a specific sensing level, the remote controller 100 may transmit the control signal including the coordinate (x, y) corresponding to the specific key and a coordinate (z) related to the sensing level to the image processing terminal 102. That is, the remote controller 100 may transmit the control signal C(x, y, z) to the image processing terminal 102.

For example, when the user selects the navigation key 210 corresponding to a right directional key with a first sensing level (normal input), the remote controller 100 may transmit a control signal C1 having a coordinate (x, y, z1) to the image processing terminal 102. When the user presses the navigation key 210 with higher pressure, e.g. selects the navigation key 210 with a second level (force input), the remote controller 100 may transmit a control signal C2 having a coordinate (x, y, z2) to the image processing terminal 100.

Here, the image processing terminal 102 may perform a different operation according to the control signal. For example, the image processing terminal 102 may perform an operation of displaying a program guide in response to the first control signal C1, and perform an operation of displaying a recommendation program list in response to the second control signal C2. That is, the image processing terminal 102 may perform a different operation according to the sensing level corresponding to the pressure or the area applied to the key of the remote controller 100 by the user.

The image processing terminal 102 performs the operation of displaying the program guide, etc. in the event that it is the television, but performs an operation of transmitting an image signal related to the program guide, etc. to the television in the event that it is the set-top box.

On the other hand, the remote controller 100 may transmit a control signal including direct command for operating a specific function, but it may transmit preferably a control signal including only the coordinate(x, y, z) to the image processing terminal 102. In this case, an operation related to the coordinate(x, y, z) may be determined by the image processing terminal 102. Accordingly, the image processing terminal 102 may perform a different operation according to software installed therein though the remote controller 100 transmits the same coordinate to the image processing terminal 102.

The force input may be classified as force up and force down.

In one embodiment, the force up may be set when the force input is applied to an up direction key as the navigation key 210. The force down may be set when the force input is applied to a down directional key as the navigation key 210. For example, a recommendation program may be displayed when the force input is applied to the up directional key under general home screen, and a VOD list may be displayed when the force input is applied to the down directional key. In this case, the recommendation program may be displayed when the force input is applied to the up directional key under the home screen and a screen on which the recommendation program is displayed is returned to the home screen when the force input is applied to the down directional key. Next, the VOD list may be displayed when the force input is applied to the down directional key under the home screen.

In another embodiment, the force up may be set when the sensing level reaches a second sensing level by applying the force input to a specific key. The force down may be set when the sensing level reaches a third sensing level by applying the force input to the specific key. For example, a recommendation program may be displayed when the sensing level reaches the second sensing level by applying the force input to a specific determination key 212. A VOD list may be displayed when the sensing level reaches the third sensing level by applying the force input to the specific determination key 212. In this case, the recommendation program may be displayed when the sensing level reaches the second sensing level by applying the force input to the specific determination key 212 under a home screen, and a screen on which the recommendation program is displayed may be returned to the home screen when the sensing level reaches the third sensing level by applying the force input to the specific determination key 212. The VOD list may be displayed when the sensing level keeps the third sensing level by applying the force input to the specific determination key 212 under the home screen, and then a screen on which the VOD list is displayed may be returned to the home screen when the sensing level reaches the second sensing level by applying the force input to the specific determination key 212.

The image processing terminal 102 performs a specific operation in response to the control signal transmitted from the remote controller 100, and executes different operation or screen according to the normal input or the force input.

The server 104 is connected to the image processing terminal 102, and may provide software to the image processing terminal 102 or receive information about the force input from the image processing terminal 102 and generate the user profile depending on the received information.

In one embodiment, the server 104 may generate the user profile by analyzing the normal input and the force input of the user during a predetermined period of time, and detect corresponding a user profile when new force input is applied after the user profile is generated. The server 104 may provide the personalized service, e.g. a recommendation list to the user through the image processing terminal 102 according to the detected user profile.

Particularly, the pressure or the area corresponding to the force input differs according to the users, for example a first user may press or touch a key with first pressure and a second user may press or touch a key with second pressure when the force input is applied. In this case, the server 104 may analyze the pressure or the area, i.e. the sensing level in accordance with the force input of individual users during a predetermined period of time, and determine the sensing level of the individual users when the force input is applied depending on the analyzing result. As a result, the sensing levels of the users may differ in the event that the users use the same remote controller 100. The server 104 may generate the user profile by analyzing the sensing level and a record including user's viewing information when the force input is applied, etc., and then detect user profile corresponding to a new force input when the new force input is applied and provide a personalized service corresponding to the detected user profile.

Here, the record may include at least one of a user's program viewing record through the image processing terminal, a login record or an application access record.

In the conventional technique, a process of authenticating a user may be firstly performed for the purpose of generating a user profile. However, in the system of the invention, the user profile may be generated by using data about the force input or the force input and the normal input without the process of authenticating the user. Of course, since the process of authenticating the user is not performed, the system of the invention can't know user's name. Nevertheless, the system may provide corresponding personalized service to the user applying the force input.

In brief, the remote controller 100 of the present embodiment may determine the sensing level by sensing the area or the pressure by the touch means, etc. and transmit the control signal including information concerning the determined sensing level to the image processing terminal 102. The image processing terminal 102 may perform different operation or screen according to the sensing level.

Additionally, the system may generate the user profile by analyzing the force input by the user during the predetermined period of time and the user's record, and then provide the personalized service based on the user profile corresponding to new force input applied to the remote controller 100. Of course, the system may consider the normal input as well as the force input when the user profile is generated.

In another embodiment, the sensing level in accordance with the pressing or the touching of the key may be determined only when the pressure or the area is continuously applied during preset period of time, which is not described above.

In still another embodiment, in the event that a sensing level corresponding to the touching or the pressing of the touch means is not directly matched with predetermined sensing levels but locates between specific levels, the sensing level may be determined as one of the specific levels. Particularly, the sensing level may be determined as an upper level or a lower level of the specific levels.

The media system may consider a gesture, as shown in FIG. 2B, as well as the force input. Here, the gesture means an operation of touching or pressing the remote controller 100 with the touch means by a predetermined length or more, and a specific operation may be performed in response to the gesture. For example, when an image of a specific entity on a program guide is being displayed in PIP in response to the force input, the PIP may shift in a specific direction, be magnified to whole area of the screen or be returned to a location before the force input is applied, according to the specific gesture. The gesture may include touching of plural keys.

On the other hand, the coordinate is expressed in three dimensional coordinate (x, y, z) in above description. However, if the area and the pressure are individually expressed, the coordinate may be expressed in four dimensional coordinate (x, y, z, t). That is, the coordinate may include at least one parameter related to the sensing level.

In a conventional remote controller, only the normal input of the key exists, and only one function may be matched with one key. As a result, the remote controller should have many keys and a complicated structure, thereby causing user's inconvenience.

However, since the remote controller 100 of the invention provides the force input as well as the normal input, plural functions may be matched with one key. Accordingly, the remote controller 100 controls the image processing terminal 102 to perform various functions with few or no key. Thus, the remote controller 100 may have a simple structure and enhance user's convenience in its usage.

Hereinafter, the operation of the media system will be described in detail in various views.

In a first view, the image processing terminal 102 may perform a different function according to the sensing level in the event that the user selects a specific key of the remote controller 100 with a different sensing level. Furthermore, the navigation key like the up key may function as the function key or the determination key according to the force input. For example, in the event that the force input is applied to the navigation key, the navigation key with the force input may function as a home key or an esc key. Of course, the function key with the force input may operate as the navigation key or the determination key, and the determination key with the force input may operate as the navigation key or the function key.

In a second view, the image processing terminal 102 may display a different screen when the user selects a specific key of the remote controller 100 with different sensing level. That is, the image processing terminal 102 may display a first screen showing a first user interface (UI) as the entity when the remote controller 100 transmits a first control signal corresponding to a first sensing level to the image processing terminal 102, and display a second screen showing a second user interface (UI) when the remote controller 100 transmits a second signal corresponding to a second sensing level to the image processing terminal 102.

In a third view, the image processing terminal 102 may perform a different operation in the same function according to the sensing level in the event that the user selects a specific key of the remote controller 100 with a different sensing level. For example, the image processing terminal 102 may shift a cursor on a program guide with a first velocity while the program guide is being displayed when the remote controller 100 transmits a first control signal corresponding to a first sensing level to the image processing terminal. The image processing terminal 102 may shift the cursor on the program guide with a second velocity which is different from the first velocity when the remote controller 100 transmits a second control signal corresponding to a second sensing level to the image processing terminal 102. Other examples will be described below.

In a fourth view, the image processing terminal 102 may implement a different entity according to the sensing level in the event that the user selects a specific key with a different sensing level. For example, the image processing terminal 102 may display an entity related to the program guide when the remote controller 100 transmits a first control signal corresponding to a first sensing level to the image processing terminal 102, and display an entity related to a user's favorite program when the remote controller 100 transmits a second control signal corresponding to a second sensing level to the image processing terminal 102.

In a fifth view, a function or an operation performed by the image processing terminal 102 may differ though the same force input is applied to the same key of the remote controller 100, according to a mode or a program set to the image processing terminal 102.

For example, an arrangement of program lists may be changed in the event that the force input is applied to the determination key 212 while the image processing terminal 102 is displaying the program lists, but recommended VOD lists suitable for the user may be displayed when the force input is applied to the determination key 212 while the image processing terminal 212 is displaying VOD lists provided by a provider.

In a sixth view, the server 104 may generate the user profile by analyzing the force input during the predetermined period of time and the record such as the viewing record, etc., and provide the personalized service based on the user profile matched with a force input inputted newly. Of course, the normal input as well as the force input may be considered when the user profile is generated.

Hereinafter, various embodiments related to operations in accordance with the sensing level of the invention will be described in detail.

Firstly, the sensing level will be defined.

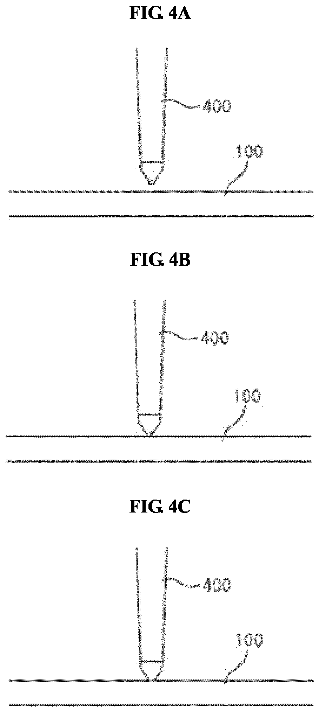

FIG. 4A to FIG. 4C are a view illustrating touch of the touch means according to one embodiment of the invention.

A first level for sensing proximity of a touch means 400 is shown in FIG. 4A. A second level for sensing the touch means 400 touching with a level less than a preset sensing level (normal input) as shown in FIG. 4B. A third level for sensing the touch means 400 touching with a level more than the preset sensing level (force input) as shown in FIG. 4C. The one or more sensing levels include the first level, the second level and the third level.

That is, a sensing level may be set to an individual key of the remote controller 100. Plural sensing levels may be set to a specific key or every key in the remote controller. One sensing level may be set to the key. Here, the sensing level may be determined through a change of capacitance.

On the other hand, the sensing level may be determined when the user touches continuously the remote controller 100 or the key thereof during a predetermined time or more

Next, embodiments related to various operations will be described in detail.

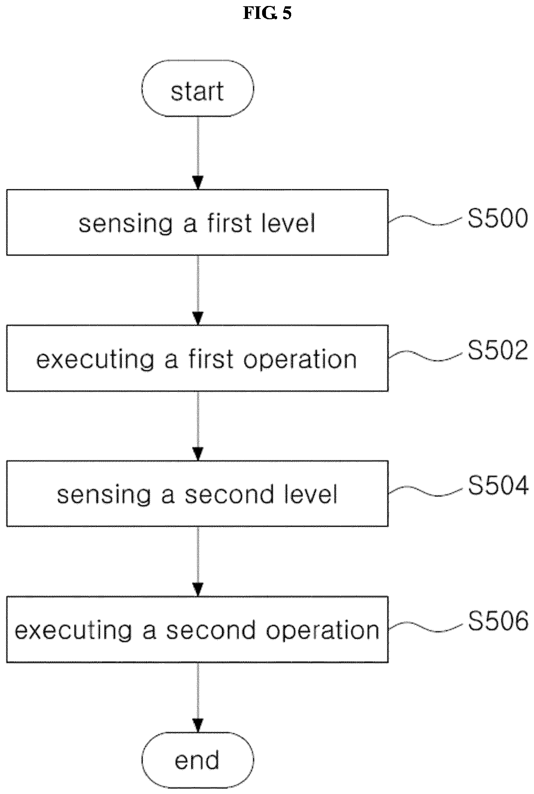

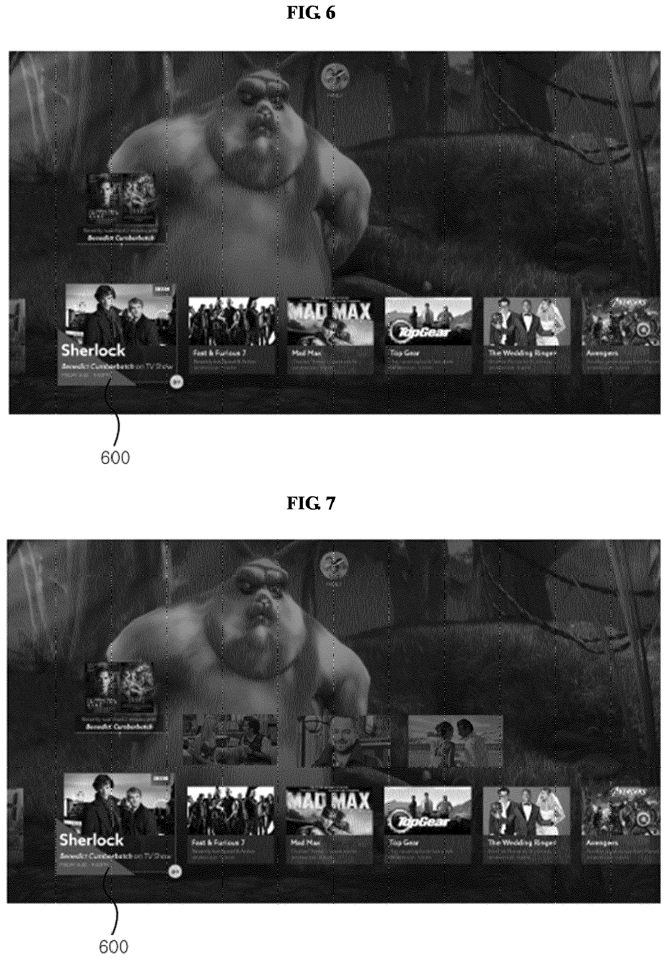

FIG. 5 is a flow chart illustrating schematically an operation of a media system according to one embodiment of the invention, and FIG. 6 to FIG. 10 are views illustrating examples related to the operation in FIG. 5.

In FIG. 5, in a step of S500, the remote controller 100 senses a first sensing level according to touch by the touch means. In one embodiment, the remote controller 100 may sense the sensing level via a sensor including a capacitive method. The sensing level may be determined by at least one of the area or the pressure applied to a specific key.

Subsequently, the remote controller 100 determines information concerning the first sensing level in accordance with the selection of the specific key as a coordinate(x, y, z1), and transmits a first control signal including the coordinate(x, y, z1) to the image processing terminal 102. In this case, the image processing terminal 102 may execute a first operation in response to the first control signal in a step of S502.

In a step of S504, the user touches the specific key with higher pressure or wider area by using the touch means, and the remote controller 102 senses a second sensing level in accordance with the touch by the touch means.

In a step of S506, the remote controller 100 determines information concerning the second sensing level as a coordinate (x, y, z2) in accordance with the selection of the specific key and transmits a second control signal including the coordinate (x, y, z2) to the image processing terminal 102. In this case, the image processing terminal 102 may execute a second operation in response to the second control signal in a step of S506.

For example, in a first embodiment related to the above operation, the image processing terminal 102 may display a screen showing a channel list or program guide including at least one channel entity 600 as shown in FIG. 6, in the event that the remote controller 100 transmits the first control signal including the information concerning the first sensing level to the image processing terminal 102.

Subsequently, the image processing terminal 102 may display a screen showing more channel entities 600 as shown in FIG. 7, in the event that the remote controller 100 transmits the second control signal including the information concerning the second sensing level to the image processing terminal 102.

That is, the image processing terminal 102 may increase or decrease the number of the entity according to the sensing level of the remote controller 100.

The method for the invention is described with the channel list in above description, but the above operation may be applied to various entities such as a VOD list, a favorite program list, etc.

In a second embodiment, the image processing terminal 102 may display a screen on which channel entities 600 are shown in a first arrangement manner as shown in FIG. 7, in the event that the remote controller 100 transmits the first control signal including the information concerning the first sensing level to the image processing terminal 102.

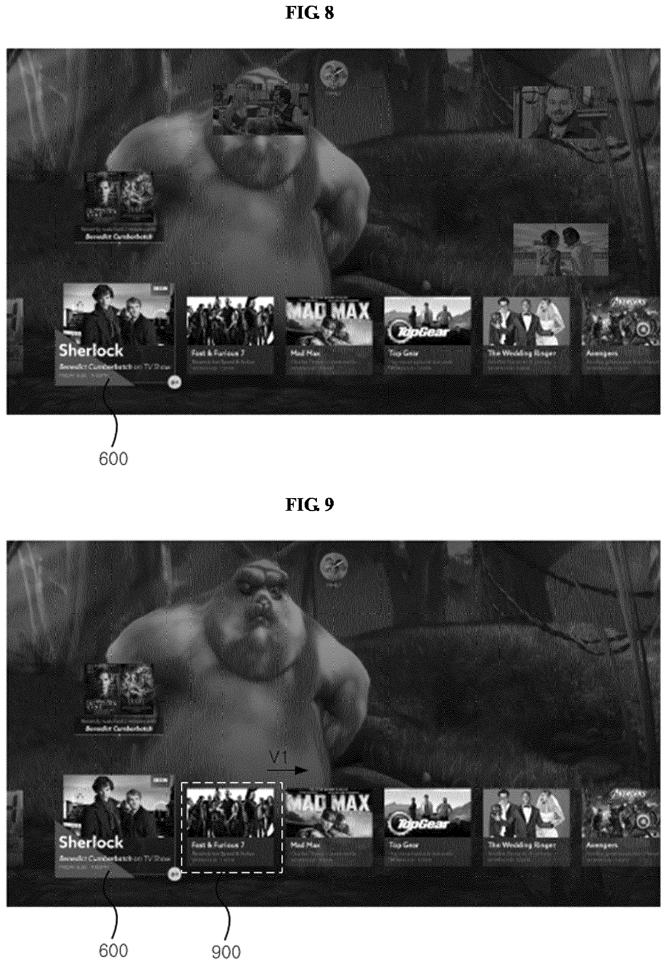

Then, the image processing terminal 102 may display a screen on which the channel entities 600 are shown in a second arrangement manner which is different from the first arrangement as shown in FIG. 8, in the event that the remote controller 100 transmits the second control signal including the information concerning the second sensing level to the image processing terminal 102.

Here, the change of the arrangement may include a case that location of the entity 600 is changed, a case that the entity 600 is added or deleted, and a case that size of the entity is changed, etc.

In a third embodiment, when the remote controller 100 transmits the first control signal including the information concerning the first sensing level corresponding to a right directional key to the image processing terminal 102, the image processing terminal 102 may display the entities 600 and shift a selected entity 900 with a first velocity (v1) in a right direction while locating the selected entity 900 on one of the entities 600 as shown in FIG. 9.

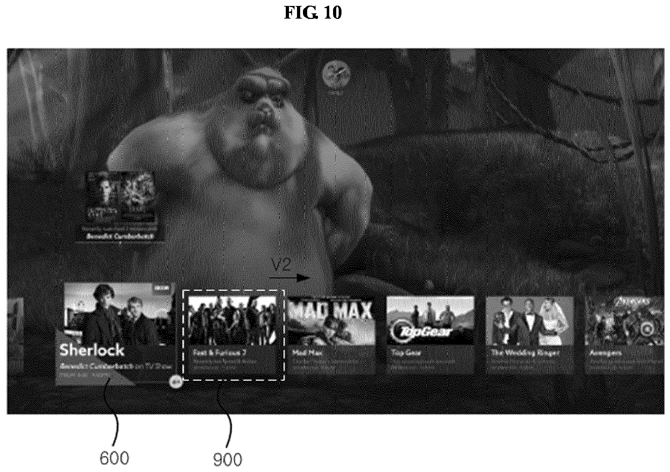

Subsequently, the image processing terminal 102 may shift the selected entity 900 with a second velocity (v2) in the right direction as shown in FIG. 10 when the remote controller 100 transmits the second control signal including the information concerning the second sensing level corresponding to the right directional key to the image processing terminal 102. In another embodiment, the image processing terminal 102 may shift the selected entity 900 via a jumping method including a method skipping one or more predetermined sections of the contents and services.

That is, the shift velocity of the entity 900 may differ according to the sensing level.

On the other hand, a playing velocity of a VOD not the shift velocity may differ according to the sensing level. Change of the shift velocity and the playing velocity may correspond to the navigation key 210 related to the directional key.

Referring synthetically to FIG. 5 to FIG. 10, the function or the operation of the image processing terminal 102 may differ according to the change of the sensing level of the specific key in the remote controller 100.

Change of the size of the entity or a shape, contents preview, change to the home screen, or change of a mode may be executed according to the sensing level.

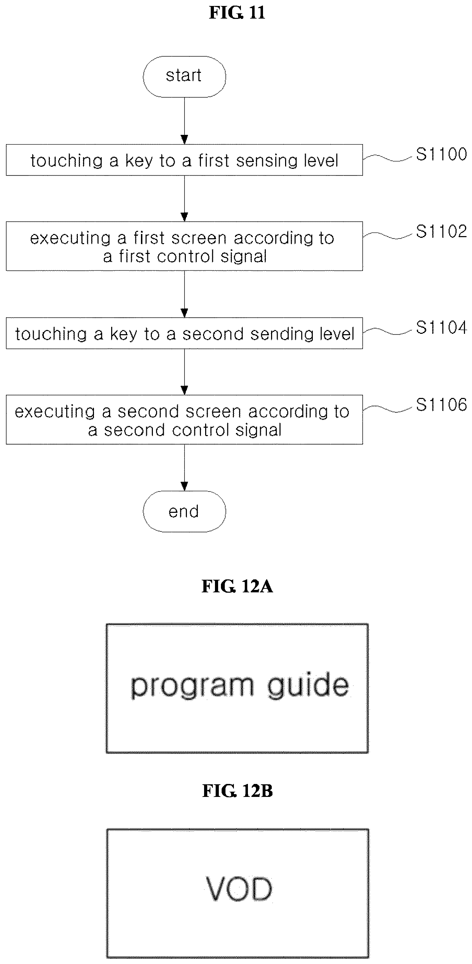

FIG. 11 is a flowchart illustrating schematically an operation of the media system according to another embodiment of the invention, and FIG. 12A and FIG. 12B are views illustrating an example related to the operation shown in FIG. 11.

In FIG. 11, the remote controller 100 senses a first sensing level in response to touch by the touch means in a step of S1100.

Subsequently, the remote controller 100 determines information concerning the first sensing level according to a selection of a specific key as three dimensional coordinate(x, y, z1) and transmits a first control signal including the coordinate(x, y, z1) to the image processing terminal 102. In this case, the image processing terminal 102 may execute a first screen in response to the first control signal in a step of S1102.

In a step of S1104, the user may touch the specific key with higher pressure or wider area by using the touch means, and the remote controller 102 sense a second sensing level in response to the touch by the touch means.

Then, the remote controller 100 determines information concerning the second sensing level according to the selection of the specific key as a coordinate(x, y, z2) and transmits a second control signal including the coordinate(x, y, z2) to the image processing terminal 102. In this case, the image processing terminal 102 may execute a second screen in response to the second control signal in a step of S1106.

In short, the media system of the present embodiment may implement a different screen on the image processing terminal 102 in response to change of the sensing level of the remote controller 100.

In another embodiment, the media system may change an application processed in the image processing terminal 102 according to the change of the sensing level of the remote controller 100.

Referring to an embodiment related to the above operation, the image processing terminal 102 may display a first screen showing a program guide as shown in FIG. 12A in the event that the remote controller 100 transmits a first control signal including information concerning a first sensing level to the image processing terminal 102.

Subsequently, the image processing terminal 102 may display a second screen showing a recommendation VOD as shown in FIG. 12B in the event that the remote controller 100 transmits a second control signal including information concerning a second sensing level to the image processing terminal 102.

That is, the image processing terminal 102 may change the screen or the application according to the sensing level of the remote controller 100.

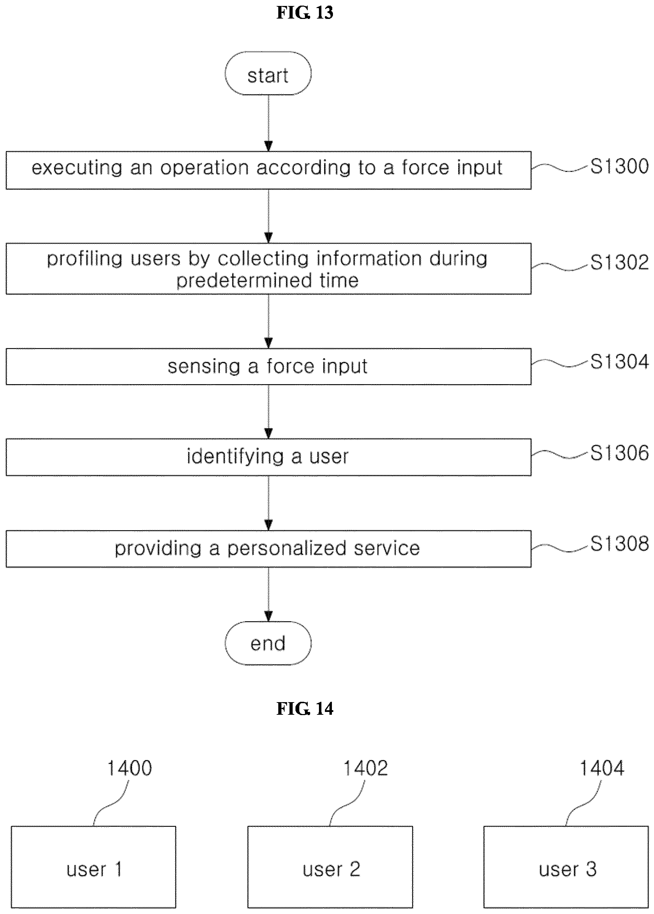

FIG. 13 is a flowchart illustrating a user profiling and a personalized service according to one embodiment of the invention, and FIG. 14 is a view illustrating a user profile according to one embodiment of the invention.

Referring to FIG. 13, the image processing terminal 102 performs an operation in response to an applied force input in the event that the user applies the force input to the remote controller 100 in a step of S1300.

In a step of S1302, the server 104 collects information about the force input during a predetermined period of time, an operation related to the force input or a record, etc. from the image processing terminal 102 or the remote controller 100 and generates the user profile by using the collected information. In this time, a process of authenticating the user is not needed.

For example, the server 104 may generate user profiles 1400, 1402 and 1404 as shown in FIG. 14, in the event that it is determined through an analysis result of the force input during the predetermined period of time that a first user applies the force input with a first sensing level, a second user applies the force input with a second sensing level and a third user applies the force input with a third sensing level. Here, the user profile may be generated based on an average of pressure or area of the force input during the determined period of time.

In the event that a specific user applies the force input to the remote controller 100 after the user profile is generated, the server 104 detects a user profile corresponding to the applied force input, i.e. identifies the user in a step of S1306. For example, in the event that the force input is applied with the second level, the server 104 may match the user profile 1402 corresponding to the second user with the force input.

In a step of S1308, the server may provide a personalized service corresponding to the detected user profile to corresponding user through the image processing terminal 102. For example, the server 104 may provide a recommendation program list corresponding to the user profile matched with the second user to the second user when the force input is applied.

On the other hand, the steps S1306 and S1308 may be performed by the image processing terminal 102 not the server 104.

In brief, the media system of the invention generates the user profile by analyzing the force input during the predetermined period of time and the record, and provides the personalized service corresponding to the generated user profile when the force input is applied. Since the process of authenticating the user is not performed in above embodiment, a user's name may not be set to the user profile, but an imaginary name provided by preset program may be set to the user profile.

On the other hand, in the event that the information about the force input during the predetermined period of time is collected, abnormal strong force input may be applied because the user drops the remote controller 100, the remote controller 100 is broken down or a network failure occurs, etc. In this case, the server 104 may generate the user profile by analyzing only the other force input except the abnormal force input, i.e. force input with a different pattern from existing pattern.

Furthermore, the gesture is not considered, but information about the gesture may be collected and considered when the user profile is generated.

In one embodiment, the image processing terminal 102 may operate in response to the force input applied to the remote controller 100 and the information about the force input may be collected, but only the force input may be applied to the remote controller 100 without the operation of the image processing terminal 102 so as to set the user profile. For example, the remote controller 100 or the image processing terminal 102 may display an input window for requesting to apply the force input to the user for the purpose of setting the user profile. A notice window for notifying a setting completion of the user profile may be displayed on the remote controller 100 or the image processing terminal 102 when the setting of the user profile is completed.

In another embodiment, the remote controller 100 may have a function of identifying a finger print, and transmits an identification result of the user's finger print to the server 104. Here, the server 104 may include the identified finger print in the user profile.

Hereinafter, a user setting process such as the changing of user's name and so on will be described in detail.

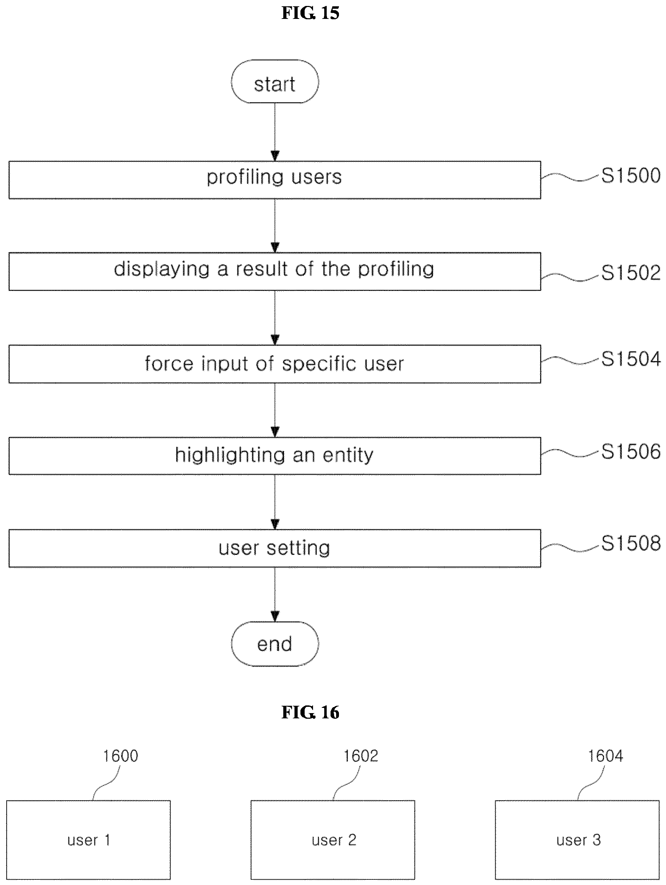

FIG. 15 is a flow chart illustrating a process of changing the user profile according to one embodiment of the invention, and FIG. 16 to FIG. 18 are views illustrating examples of the process of changing the user profile.

In FIG. 15, the server 104 generates a user profile by analyzing user's force input during a predetermined period of time and a record, etc. in a step of S1500, and displays the user profile through the image processing terminal 102 or a display connected to the image processing terminal 102 in a step of S1502. For example, the server 104 may generate user profiles 1600, 1602 and 1604 indicated with user1, user2 and user3 and display the user profiles 1600, 1602 and 1604.

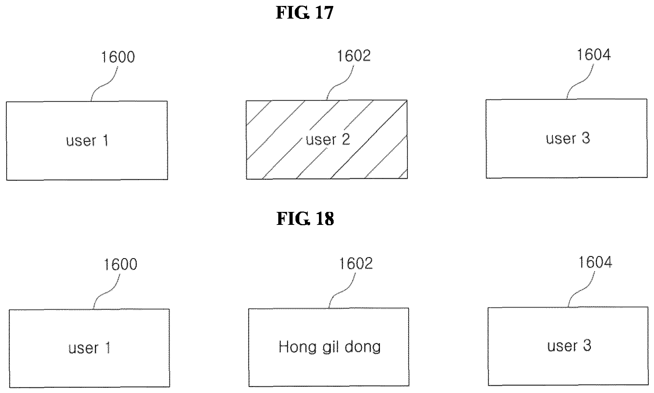

In the event that a specific user applies the force input to the remote controller 100 in a step of S1504, the server 104 may highlight an entity corresponding to the force input, i.e. the user profile in a step of S1506. For example, in the event that the force input corresponds to the user profile 1602, the image processing terminal 102 may highlight the user profile 1602 according to request of the server 104 as shown in FIG. 17. Accordingly, a user applying the force input may verify that his profile is the user profile 1602.

In a step of S1508, the user may change at least one setting of the highlighted user profile. For example, the user may change a name of the highlighted user profile 1602 to his name, e.g. "Hong gil dong".

In short, the media system of the invention may generate the user profile by analyzing the force input and the record and change the generated user profile.

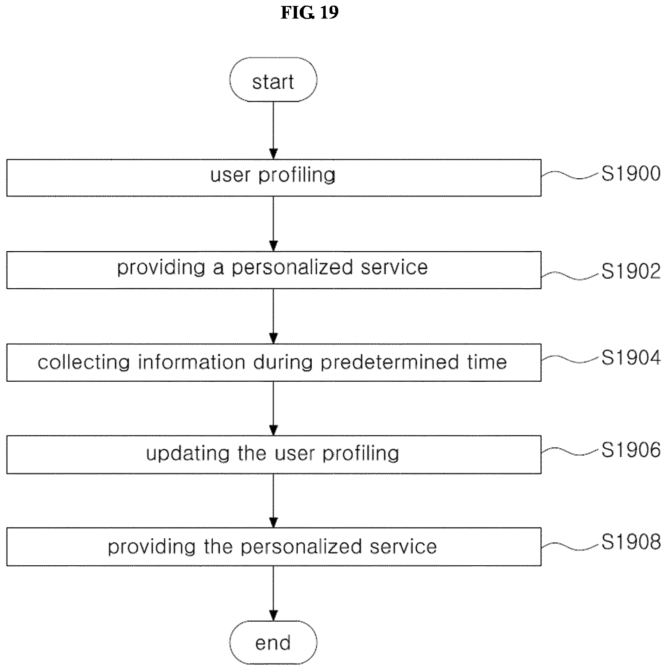

FIG. 19 is a flowchart illustrating a process of updating the user profile according to one embodiment of the invention.

Referring to FIG. 19, the server 104 generates the user profile by analyzing the force input during a predetermined period of time and a record, etc. in a step of S1900.

In a step of S1902, the server 104 provides a personalized service with reference to the user profile corresponding to the force input when a specific user applies the force input.

In a step of S1904, the server 104 may collect continuously data (information) about user's force input during a predetermined period of time after the step S1900, or collect information about user's force input during a predetermined period of time after upgrade of software of the media system.

The server 104 updates the user profile based on the information about the collected force input in a step of S1906, and provides the personalized service to the user according to the updated user profile in a step of S1908.

In brief, the media system of the invention may update or change the user profile in preset period or at a specific event, and provide the personalized service according to the updated or changed user profile.

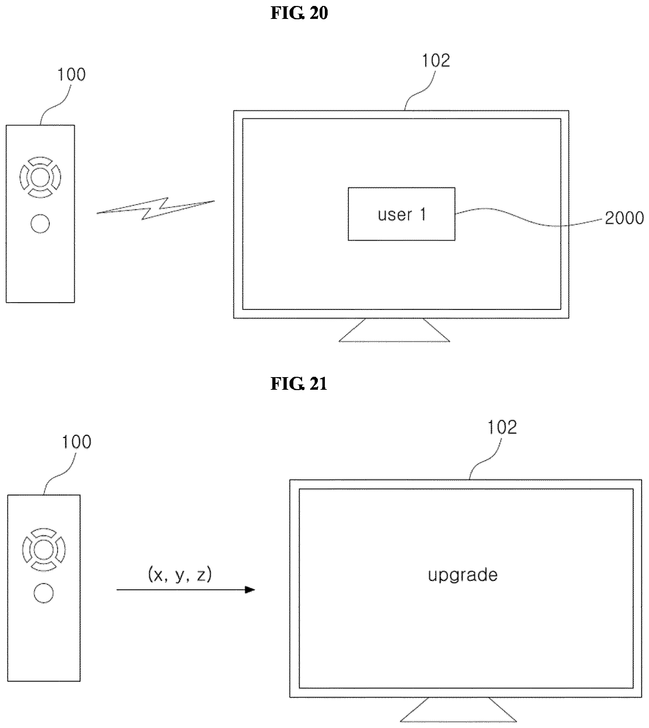

FIG. 20 is a view illustrating an operation of a media system according to a still another embodiment of the invention.

A related entity is not displayed on the image processing terminal 102 when the sensing level of the remote controller 100 corresponds to the normal input, but an entity notifying of a force input 2000 may be displayed on the image processing terminal 102 when the sensing level of the remote controller 100 corresponds to the force input. Accordingly, the user may verify whether an input to the remote controller 100 is the normal input or the force input, through only viewing of the image processing terminal 102 without seeing the remote controller 100. Here, the entity notifying of a force input 2000 may have various shapes such as a rectangular shape, a circular shape, etc.

In one embodiment, information related to the user profile, e.g. the user's name may be displayed to the entity notifying of a force input 2000.

Briefly, the entity notifying of a force input 2000 is displayed on the image processing terminal 102 or the display connected to the image processing terminal 102, so as to indicate the force input. On the other hand, the remote controller 100 may occur vibration or sound when the force input is applied, so as to notify the force input. That is, the remote controller 100 may perform a haptic operation when the force input is applied.

FIG. 21 is a view illustrating an upgrade operation of the media system according to one embodiment of the invention.

In FIG. 21, the image processing terminal 102 may perform an upgrade according to upgrade software but the remote controller 100 may not perform extra upgrade when software of the media system is upgraded.

In this case, the remote controller 100 may transmit only the control signal including the coordinate(x, y, z) to the image processing terminal 102, and the image processing terminal 102 may perform an operation corresponding to the coordinate(x, y, z) according to an installed software. Accordingly, the image processing terminal 102 may perform a different operation though the remote controller 100 transmits the control signal including the same coordinate(x, y, z) to the image processing terminal 102.

That is, since the remote controller 100 need not to be upgraded, the remote controller 100 may be achieved with a simple structure and specifications.

On the other hand, the user profile may be again generated or be updated by analyzing the force input during a predetermined period of time after the upgrade of the media system.

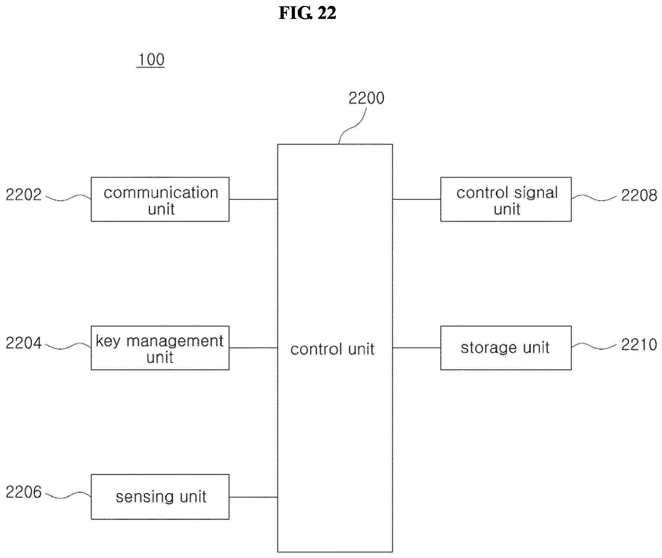

FIG. 22 is a block diagram illustrating a remote controller according to one embodiment of the invention.

In FIG. 22, the remote controller 100 of the present embodiment may include a control unit 2200, a communication unit 2202, a key management unit 2204, a sensing unit 2206, a control signal unit 2208 and a storage unit 2210.

The communication unit 2202 is a path connected to the image processing terminal 102 or the server 104, and may use a wired communication or a wireless communication.

The key management unit 2204 manages the navigation key, the determination key, the function key, etc., and may differently set constitution and arrangement, etc. of the keys according to user's request in the event that the keys are embodied in software.

The sensing unit 2206 senses the normal input and the force input.

The control signal unit 2208 generates the control signal having coordinate information in accordance with key input of the user, and transmits the generated control signal to the image processing terminal 102.

The storage unit 2210 stores various data such as the control signal, the program and so on.

The control unit 2200 controls an operation of elements of the image processing terminal 102.

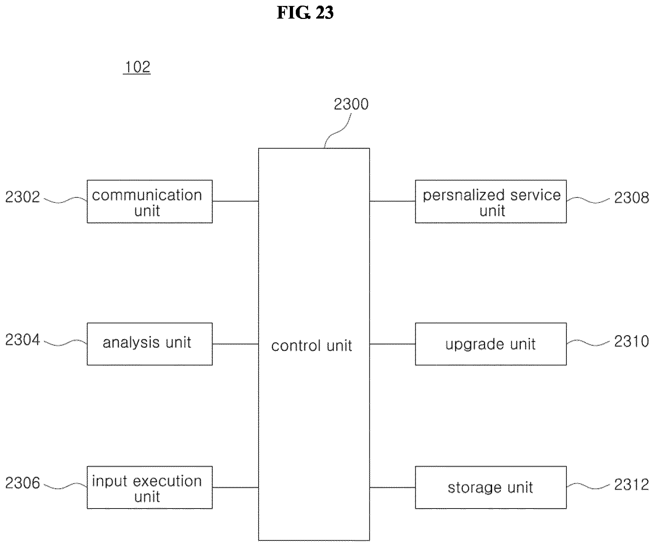

FIG. 23 is a block diagram illustrating an image processing terminal according to one embodiment of the invention.

In FIG. 23, the image processing terminal 102 of the present embodiment may include a control unit 2300, a communication unit 2302, an analysis unit 2304, an input execution unit 2306, a personalized service unit 2308, an upgrade unit 2310 and a storage unit 2312.

The communication unit 2302 is a connection path to the remote controller 100 or the server 104.

The analysis unit 2304 analyzes the control signal transmitted from the remote controller 100.

The input execution unit 2306 executes an operation corresponding to the force input according to the analyzing result.

The personalized service unit 2308 may provide the personalized service according to the user profile, and for example provide proper recommendation program based on the user profile corresponding to the force input according to control of the server 104 when the force input is applied.

The upgrade unit 2310 may manage upgrade of the software, and for example download the software from the server 104 and upgrade the image processing terminal 102 based on the downloaded software.

The storage unit 2312 stores various data such as the information concerning the force input, the software and so on.

The control unit 2300 controls an operation of elements of the image processing terminal 102.

On the other hand, the image processing terminal 102 may further include a force input indicating unit for displaying preset entity according to the force input.

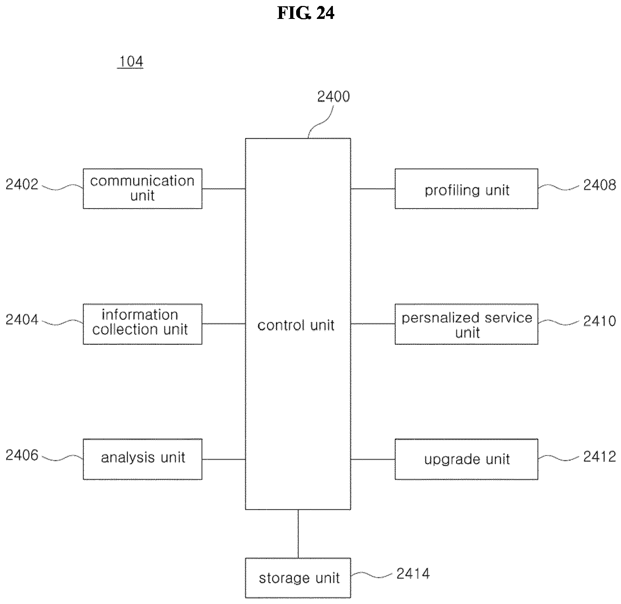

FIG. 24 is a block diagram illustrating a server, i.e. a computer processing device according to one embodiment of the invention.

In FIG. 24, the server 104 of the present embodiment may include a control unit 2400, a communication unit 2402, an information collection unit 2404, an analysis unit 2406, a profiling unit 2408, a personalized service unit 2410, an upgrade unit 2412 and a storage unit 2414.

The communication unit 2402 is a connection path to the remote controller 100 or the image processing terminal 102.

The information collection unit 2404 collects information about the force input or the record, etc.

The analysis unit 2406 analyzes the collected information.

The profiling unit 2408 may generate and manage at least one user profile through the analyzed information, and for example change a name set in the user profile. Here, a process of authenticating the user is not needed when the user profile is generated.

The personalized service unit 2410 may provide the personalized service based on corresponding user profile when the force input is applied, e.g. provide a recommendation list to the user.

The upgrade unit 2412 may upgrade the software of the media system, e.g. provide the software to the image processing terminal 102 and upgrade the image processing terminal 102 according to the provided software.

The storage unit 2414 stores various data such as the user profile, the software and so on.

The control unit 2400 controls an operation of elements of the server 104.

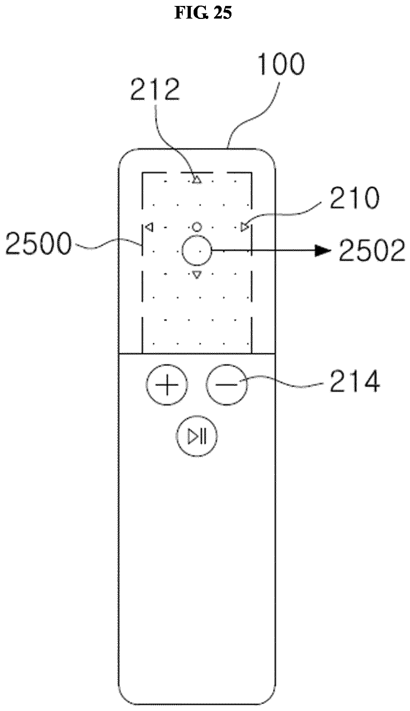

FIG. 25 is a view illustrating a structure of the remote controller according to one embodiment of the invention.

In FIG. 25, a first sensing unit for sensing the touch by the touch means via a capacitive method may be formed through the whole of an area 2500, and a second sensing unit for sensing the force input may be formed on an area 2502.

That is, the second sensing unit for sensing the force input is formed in the area smaller than the first sensing unit for sensing the touch. Of course, the second sensing unit in the area 2502 may sense the force input though the user applies the force input in an area except the area 2502.

Here, a part of the navigation key 210, the determination key 212 and the function key 214 may locate in the area 2502, or every key 210, 212 and 214 may locate outside of the area 2502.

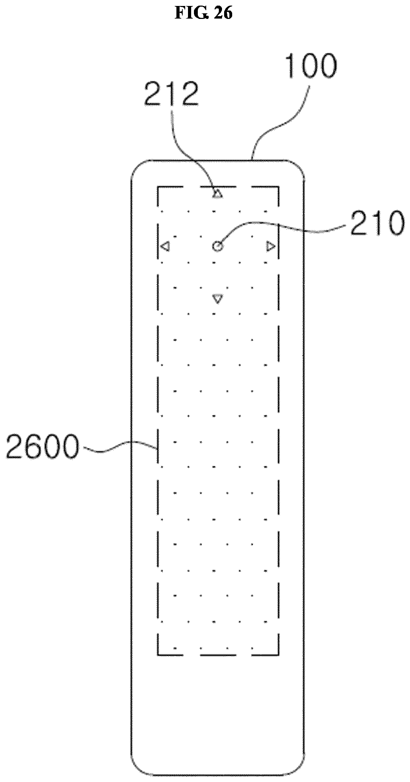

FIG. 26 is a view illustrating a structure of the remote controller according to another embodiment of the invention.

In FIG. 26, a first sensing unit for sensing the touch by the touch means via the capacitive method and a second sensing unit for sensing the force input may be set on an area 2600.

That is, the second sensing unit of the present embodiment may be formed through wider area than the second sensing unit in FIG. 25, and thus the remote controller 100 may sense the force input with more excellent sensitivity. The remote controller 100 in FIG. 25 may be lower than that in FIG. 26 in view of cost.

Components in the embodiments described above can be easily understood from the perspective of processes. That is, each component can also be understood as an individual process. Likewise, processes in the embodiments described above can be easily understood from the perspective of components.

Also, the technical features described above can be implemented in the form of program instructions that may be performed using various computer means and can be recorded in a computer-readable medium. Such a computer-readable medium can include program instructions, data files, data structures, etc., alone or in combination. The program instructions recorded on the medium can be designed and configured specifically for the invention or can be a type of medium known to and used by the skilled person in the field of computer software. Examples of a computer-readable medium may include magnetic media such as hard disks, floppy disks, magnetic tapes, etc., optical media such as CD-ROM's, DVD's, etc., magneto-optical media such as floptical disks, etc., and hardware devices such as ROM, RAM, flash memory, etc. Examples of the program of instructions may include not only machine language codes produced by a compiler but also high-level language codes that can be executed by a computer through the use of an interpreter, etc. The hardware mentioned above can be made to operate as one or more software modules that perform the actions of the embodiments of the invention, and vice versa.

The embodiments of the invention described above are disclosed only for illustrative purposes. A person having ordinary skill in the art would be able to make various modifications, alterations, and additions without departing from the spirit and scope of the invention, but it is to be appreciated that such modifications, alterations, and additions are encompassed by the scope of claims set forth below.

### [Description of reference numbers]

| | |
|---|---|
| 100 : remote controller | 102 : image processing terminal |
| 104 : server | 200 : body |
| 210 : navigation key | 212 : function key |
| 214 : determination key | 400 : touch means |
| 600 : entity | 900 : selection entity |

## Claims

1. A computer processing device, comprising:
an information collection unit configured to collect information about a force input applied to a remote controller during a predetermined period of time; and
a profiling unit configured to generate at least one user profile according to the collected information,
wherein the force input means an input applied to the remote controller with higher pressure or wider area than pressure or an area of a normal input.

2. The computer processing device of claim 1, further comprising:
a personalized service unit configured to provide a personalized service based on corresponding user profile when new force input is applied to the remote controller.

3. The computer processing device of claim 1, wherein the user profile is generated for each user by using the force input and a record without performing a process of authenticating the user.

4. The computer processing device of claim 1, wherein the user profile is changeable according to user's request.

5. The computer processing device of claim 1, wherein the profiling unit generates the user profile by analyzing an average of pressure or area of the force input during the predetermined period of time.

6. The computer processing device of claim 1, wherein the profiling unit updates or changes the generated user profile according to a specific event or a preset setting.

7. A computer processing device, comprising:
a personalized service unit configured to collect information about a force input applied to a remote controller during a predetermined period of time or information about the force input and user's record, and set a personalized service for a user according to the collected information; and
a control unit configured to control an operation of the personalized service unit,
wherein the force input means an input applied to the remote controller with higher pressure or wider area than pressure or an area of a normal input.

8. The computer processing device of claim 7, wherein the user's record includes one or more of a user's viewing record via an image processing terminal connected to the computer processing device, a login record or an application access record.

9. The computer processing device of claim 7, further comprising:
a profiling unit configured to generate at least one user profile by analyzing the force input during the predetermined period of time and the record,
wherein the personalized service unit provides the personalized service to the user through an image processing terminal connected to the computer processing device according to the user profile corresponding to new force input when the new force input is applied after the user profile is generated.

10. The computer processing device of claim 9, wherein the user profile is generated by using the force input and the record without performing a process of authenticating the user.

11. An image processing terminal, comprising:
an input execution unit configured to execute a specific operation in response to a force input applied to a remote controller, wherein the specific operation is different from an operation in response to a normal input applied to the remote controller; and
a personalized service unit configured to provide a personalized service for a user according to a user profile corresponding to the force input applied to the remote controller after the user profile is set,
wherein the user profile is related to information, collected during a predetermined period of time, about the force input to the remote controller, and the force input means an input applied to the remote controller with higher pressure or wider area than pressure or an area of the normal input.

12. The image processing terminal of claim 11, wherein the personalized service unit provides a recommendation list according to the user profile received from a computer processing device.

13. The image processing terminal of claim 11, wherein the input execution unit executes a first function or a first screen when the normal input is applied to a specific key, and executes a second function or a second screen different from the first function or the first screen when the force input is applied to the specific key.

14. The image processing terminal of claim 11, wherein the input execution unit executes an operation related to a determination key or a function key when the force input is applied to a navigation key of the remote controller, executes an operation related to the navigation key or the function key when the force input is applied to the determination key of the remote controller, or executes an operation related to the navigation key or the determination key when the force input is applied to the function key of the remote controller.

15. A method for providing a personalized service, the method comprising:
collecting information about a force input applied to a remote controller during a predetermined period of time;
generating at least one user profile through the collected information about force input; and
providing the personalized service according to a user profile corresponding to new force input when the new force input is applied to the remote controller after the user profile is generated,
wherein the force input means an input applied to the remote controller with higher pressure or wider area than pressure or an area of a normal input.
